# EUROPÄISCHE PATENTANMELDUNG

(11) **EP 4 485 959 A1**
(43) Veröffentlichungstag der Anmeldung: **01.01.2025**
(21) Anmeldenummer: 24185033.8
(22) Anmeldetag: 27.06.2024
(51) Int. Cl.: H04N 23/80, H04N 17/00, H04N 5/77, H04N 9/80

(54) **VERFAHREN ZUM ERZEUGEN UND AUFBEREITEN VON BILDDATEN**

(30) Priorität: 30.06.2023 DE 102023117296
(71) Anmelder: Arnold & Richter Cine Technik GmbH & Co. Betriebs KG, 80807 München (DE)
(72) Erfinder: Oehler, Achim, 81247 München (DE)
(74) Vertreter: Manitz Finsterwald Patent- und Rechtsanwaltspartnerschaft mbB

(57) **Zusammenfassung**

Bei einem Verfahren zum Erzeugen von Bilddaten mittels einer Kamera, die einen Bildsensor umfasst, der eine Vielzahl von in Zeilen und Spalten angeordneten lichtempfindlichen Sensorzellen aufweist, und zum Aufbereiten der Bilddaten mittels einer externen Bildaufbereitungseinrichtung sind folgende Schritte vorgesehen: Bereitstellen kameraexemplar-spezifischer Daten über festgestellte Eigenschaften der Kamera, die von kameramodell-generischen Eigenschaften der Kamera abweichen können; Ansteuern des Bildsensors dazu, in Abhängigkeit von der Intensität des auf die Sensorzellen auftreffenden Lichts jeweilige Bildsignalwerte zu erzeugen; in der Kamera Auslesen der Bildsignalwerte und Erzeugen vorläufiger Bilddaten aus den Bildsignalwerten; Übertragen der vorläufigen Bilddaten zusammen mit Metadaten, welche die kameraexemplar-spezifischen Daten umfassen oder zumindest eine Zuordnung der kameraexemplar-spezifischen Daten zu den vorläufigen Bilddaten erlauben, zu der externen Bildaufbereitungseinrichtung; und Erzeugen aufbereiteter Bilddaten mittels der externen Bildaufbereitungseinrichtung, indem auf die vorläufigen Bilddaten eine von den kameraexemplar-spezifischen Daten abhängige Korrektur angewandt wird.

## Beschreibung

Die Erfindung betrifft ein Verfahren zum Erzeugen von Bilddaten und anschließenden Aufbereiten der Bilddaten.

Bilddaten können mittels einer Kamera erzeugt werden, wobei es sich bei der Kamera insbesondere um eine Bewegtbildkamera handeln kann, die als Bilddaten eine Abfolge von Einzelbildern erzeugt, die mit einer bestimmten Bildwiederholfrequenz (auch als Bildrate bezeichnet) aufgezeichnet werden. Dabei kann die Kamera als elektronische Kamera ausgebildet sein und einen Bildsensor umfassen, der eine Vielzahl von in Zeilen und Spalten angeordneten lichtempfindlichen Sensorzellen aufweist. Die Kamera kann ferner eine Ausleseelektronik aufweisen. In Abhängigkeit von der Intensität des auf die Sensorzellen auftreffenden Lichts kann der Bildsensor jeweilige Bildsignalwerte erzeugen, die von der Ausleseelektronik ausgelesen und/oder weiterverarbeitet werden können. Aus den Bildsignalwerten kann dann (auf verschiedene Weisen) ein Bild erzeugt werden, das entsprechend dem Bildsensor eine Vielzahl von in Zeilen und Spalten angeordneten Bildpunkten (Pixeln) aufweisen kann, welche jeweils einer der Sensorzellen entsprechen.

Bei den aus dem Bildsensor ausgelesenen Bildsignalwerten handelt es sich zunächst um Rohbilddaten, die nicht unbedingt unmittelbar als qualitativ hochwertiges Bild angezeigt werden können. Beispielsweise kann der Bildsensor mit einer Farbfilter-Matrix versehen sein, die gemäß einem vorgegebenen Farbmuster jeweils nur Licht eines bestimmten Bereichs des Farbspektrums zu den einzelnen Sensorzellen durchlässt. Dadurch wird jede der Sensorzellen des Bildsensors entsprechend der Farbfilter-Matrix einem jeweiligen von insgesamt beispielsweise drei oder vier verschiedenen Farbkanälen zugeordnet, die durch den von dem Farbfilter jeweils durchgelassen Bereich des Farbspektrums definiert werden. Weit verbreitet ist dabei die Verwendung eines sogenannten Bayer-Filters, bei dem jeweils von vier in zwei Zeilen und zwei Spalten angeordneten Sensorzellen zwei diagonal zueinander angeordnete Sensorzellen mit einem grün transmittierenden Farbfilter versehen sind und von den beiden übrigen Sensorzellen eine mit einem rot transmittierenden und die andere mit einem blau transmittierenden Farbfilter versehen ist. Bei solchen Rohbilddaten liegt daher zunächst für jeden Bildpunkt nur ein einzelner einem einzigen Farbkanal zugeordneter Bildsignalwert vor, wobei die Bildsignalwerte benachbarter Bildpunkte unterschiedlichen Farbkanälen zugeordnet sind. Um basierend auf diesen Rohbilddaten ein realistisches Bild anzeigen zu können, müssen daher für jeden Bildpunkt durch Interpolation (sogenanntes Demosaicing) aus Bildsignalwerten benachbarter Bildpunkte weitere Bildsignalwerte ermittelt werden, die den übrigen Farbkanälen, denen der Bildsignalwert des jeweiligen Bildpunkts nicht zugeordnet ist, zugeordnet sind.

Für Kameras eines bestimmten Kameramodells ist das in dem jeweiligen Kameramodell verwendete Farbfilter als kameramodell-generische Eigenschaft der Kamera bzw. des Bildsensors in der Regel bekannt, und es kann mit Sicherheit davon ausgegangen werden, dass in jeder Kamera des jeweiligen Kameramodells tatsächlich das jeweilige Farbfilter verwendet wird. Andere kameramodell-generische Eigenschaften, die ebenfalls für das Erzeugen eines qualitativ hochwertigen Bildes aus den vom Bildsensor erzeugten Bildsignalwerten bzw. aus den daraus erzeugten Rohbilddaten zu berücksichtigen sind, stehen dagegen nicht mit gleicher Sicherheit fest.

Beispielsweise kann zwar als kameramodell-generische Eigenschaft der Kamera ein, insbesondere für alle Sensorzellen gleicher, fester nomineller Zusammenhang zwischen der Intensität des auf eine jeweilige Sensorzelle auftreffenden Lichts und dem von der jeweiligen Sensorzelle infolgedessen erzeugten Bildsignalwert definiert sein. Ein derartiger nomineller Zusammenhang kann für mehrere Exemplare eines Kameramodells (d. h. eines Typs) als generische Eigenschaft spezifiziert sein. Jedoch kann der tatsächliche Zusammenhang, etwa aufgrund von Fertigungstoleranzen, von dem nominellen Zusammenhang abweichen, und zwar grundsätzlich für jede Sensorzelle in unterschiedlich starkem Maße. Ferner können einzelne Sensorzellen und/oder einzelne Verstärker des Bildsensors oder Teile der nachgeordneten Ausleseelektronik eines jeweiligen Kameraexemplars defekt sein. Solche Abweichungen der tatsächlichen Eigenschaften von den kameramodell-generischen Eigenschaften können zu störenden Artefakten in den Bilddaten führen, weshalb für das Erzeugen eines qualitativ hochwertigen Bildes aus den Bilddaten angestrebt wird, die Abweichungen idealerweise durch eine entsprechende Korrektur vollständig zu kompensieren.

In der Regel ist es daher erforderlich, für jedes einzelne Kameraexemplar eines Kameramodells gesondert die tatsächlich vorliegenden Eigenschaften der Kamera, insbesondere des Bildsensors und/oder der einzelnen Sensorzellen und/oder der der Ausleseelektronik, die von den kameramodell-generischen Eigenschaften der Kamera abweichen können, festzustellen, etwa im Rahmen einer Kalibrierung. Das Ergebnis einer solchen Kalibrierung, das beispielsweise in der Kamera hinterlegt sein kann, kann dann für eine Korrektur von Störungen in den Bilddaten, die aus Abweichungen zwischen den tatsächlichen und den kameramodell-generischen Eigenschaften resultieren, genutzt werden.

Elektronische Kameras umfassen oftmals eine integrierte Bildaufbereitungseinrichtung, die durch spezielle Software und/oder Hardware realisiert sein kann und dazu ausgebildet ist, die genannte Interpolation und/oder die genannte Korrektur durchzuführen, um dadurch aufbereitete Bilddaten zu erzeugen, die dann unmittelbar als qualitativ hochwertiges Bild angezeigt (beispielsweise auf einer an der Kamera vorgesehenen oder angeschlossenen Anzeigeeinheit), abgespeichert und/oder ausgegeben werden können. Allerdings erfordert eine solche kamerainterne Bildaufbereitung eine hinreichend hohe Rechenleistung der Kamera, die dazu eine entsprechend komplexe Hardware und/oder Software umfassen muss. Dabei steigt der Rechenaufwand mit den Qualitätsanforderungen ebenso wie mit Parametern wie der Auflösung (Pixelanzahl) und der Bildwiederholfrequenz, die im Zuge des technologischen Fortschritts und Anspruchs in der Regel immer weiter zunehmen. Als Folge davon steigen die Komplexität und somit die Kosten sowie der Leistungsbedarf der Kamera.

Um dies zu vermeiden, ist es denkbar, denjenigen Teil der Bildaufbereitung, der nicht von kameraexemplar-spezifischen Daten wie den genannten Abweichungen zwischen den festgestellten (tatsächlichen) und den kameramodell-generischen (nominellen) Eigenschaften abhängt, aus der Kamera auszulagern. Denn dann kann jedes Kameraexemplar eines jeweiligen Kameramodells Bilddaten liefern, die in einheitlicher Weise zur Erzeugung eines qualitativ hochwertigen Bildes aufbereitet werden können. Allerdings sinkt dadurch zwar der in der Kamera zu leistende Rechenaufwand, er bleibt jedoch aufgrund der weiterhin in der Kamera durchgeführten Korrektur der genannten Abweichungen - insbesondere bei Qualitätsansprüchen, wie sie in professionellen Filmproduktionen an das letztendlich resultierende Bild gestellt werden - vergleichsweise hoch.

Es ist eine Aufgabe der Erfindung ein Verfahren zum Erzeugen und Aufbereiten von Bilddaten bereitzustellen, das geeignet ist, die Komplexität der Datenverarbeitung in der Kamera gering zu halten und hohen Qualitätsansprüchen an das resultierende Bild zu genügen.

Die Aufgabe wird gelöst durch ein Verfahren mit den Merkmalen des Anspruchs 1. Vorteilhafte Weiterbildungen der Erfindung ergeben sich aus den abhängigen Ansprüchen, der vorliegenden Beschreibung sowie den Figuren.

Das erfindungsgemäße Verfahren betrifft das Erzeugen von Bilddaten, insbesondere Bewegtbilddaten, mittels einer Kamera und Aufbereiten der Bilddaten mittels einer externen Bildaufbereitungseinrichtung. Dabei umfasst die Kamera einen Bildsensor, der (wie oben beschrieben) eine Vielzahl von in Zeilen und Spalten angeordneten lichtempfindlichen Sensorzellen aufweist, sowie eine dem Bildsensor nachgeordnete Ausleseelektronik.

Das Verfahren umfasst, dass kameraexemplar-spezifische Daten über festgestellte Eigenschaften der Kamera, die von kameramodell-generischen Eigenschaften der Kamera abweichen können, bereitgestellt werden. Insbesondere können dabei kameraexemplar-spezifische Daten über Abweichungen der festgestellten Eigenschaften von den kameramodell-generischen Eigenschaften bereitgestellt werden. Die kameraexemplar-spezifischen Daten über festgestellte Eigenschaften der Kamera können sich lediglich auf einen Teil der Kamera beziehen, beispielsweise auf den Bildsensor an sich, auf die einzelnen Sensorzellen des Bildsensors, auf integrierte Signalverstärker des Bildsensors, auf integrierte Analog-Digital-Wandler (A/D-Wandler) des Bildsensors, auf die Ausleseelektronik der Kamera an sich, oder auf Teile der Ausleseelektronik. Die Ausleseelektronik der Kamera kann verschiedene Komponenten umfassen, die außerhalb des Bildsensors beispielsweise auf einer gemeinsamen Platine oder verteilt angeordnet sind. Die Ausleseelektronik der Kamera kann beispielsweise Verstärker, Analog-Digital-Wandler oder elektronische Komponenten zur Signalverarbeitung oder Steuerung umfassen, z.B. einen integrierten Schaltkreis (IC), einen Mikroprozessor, eine zentrale Recheneinheit (CPU), eine Grafikprozessoreinheit (GPU), eine Anwendungsspezifische Integrierte Schaltung (ASIC) und/oder ein Field Programmable Gate Array (FPGA).

Bei den festgestellten Eigenschaften kann es sich insbesondere um tatsächlich vorliegende Eigenschaften der Kamera (insbesondere des Bildsensors und der Ausleseelektronik) im Unterschied zu bloß nominellen Eigenschaften der Kamera (wie vorstehend erläutert) handeln. Das Feststellen der Eigenschaften ist dabei nicht unbedingt Teil des erfindungsgemäßen Verfahrens, sondern kann schon vorab erfolgt sein, etwa durch ein gesondertes Kalibrierverfahren, das beispielsweise bereits durch den Hersteller der Kamera nach deren Herstellung durchgeführt worden sein kann. Grundsätzlich kann das erfindungsgemäße Verfahren das Feststellen der (tatsächlichen) Eigenschaften aber auch umfassen, welches dann vor dem Bereitstellen der kameraexemplar-spezifischen Daten erfolgt.

Die genannten Eigenschaften der Kamera können sich auf alle mittels des Bildsensors gewonnenen Daten, insbesondere zumindest im Wesentlichen einheitlich, auswirken, oder nur auf einen Teil der gewonnenen Daten, z.B. auf eine oder mehrere jeweilige Zeilen oder Spalten von Sensorzellen des Bildsensors.

Die genannten Eigenschaften der einzelnen Sensorzellen können bei einigen Ausführungsformen darauf beschränkt sein, sich auf die mittels der jeweiligen Sensorzelle gewonnenen Daten auszuwirken. Die festgestellten Eigenschaften der einzelnen Sensorzellen können insbesondere in Form einer (Kalibrier-)Matrix vorliegen, die eine dem Bildsensor entsprechende Anzahl von Zeilen und Spalten aufweist und für jede Sensorzelle des Bildsensors einen oder mehrere Korrekturparameter und/oder Statusinformationen (zum Beispiel darüber, ob die jeweilige Sensorzellen defekt ist oder nicht) umfasst. Durch eine derartige Matrix können insbesondere auch nicht-lineare Kennlinien der Sensorzellen parametriert werden, wie nachstehend noch erläutert wird.

Das Bereitstellen der kameraexemplar-spezifischen Daten kann insbesondere dadurch erfolgen, dass die kameraexemplar-spezifischen Daten in der Kamera, in einer externen Datenbank und/oder in einem sonstigen Speicher hinterlegt sind. Vorteilhafterweise ist den kameraexemplar-spezifischen Daten dabei eine Identifikationsinformation zugeordnet, über die sich das jeweilige Kameraexemplar bzw. dessen relevante Komponenten (insbesondere der Bildsensor und/oder die Ausleseelektronik oder Teile hiervon), auf das/die sich die kameraexemplar-spezifischen Daten beziehen, eindeutig identifizieren lässt/lassen.

Das Verfahren umfasst ferner, dass der Bildsensor dazu angesteuert wird, in Abhängigkeit von der Intensität des auf die Sensorzellen auftreffenden Lichts jeweilige Bildsignalwerte zu erzeugen. Insbesondere erzeugt dabei jede der Sensorzellen, sofern sie nicht defekt ist, in Abhängigkeit von der Intensität des auf sie auftreffenden Lichts einen oder (nacheinander) mehrere Bildsignalwerte. Vorzugsweise wird der Bildsensor dabei dazu angesteuert, dass alle Sensorzellen synchronisiert mit einer bestimmten vorgegebenen Bildwiederholfrequenz Bildsignalwerte erzeugen.

Das Verfahren umfasst ferner, dass in der Kamera die Bildsignalwerte ausgelesen und aus den Bildsignalwerten vorläufige Bilddaten erzeugt werden. Die Bildsignalwerte können im Wesentlichen unmittelbar aus dem Bildsensor ausgelesen werden. Das kann insbesondere umfassen, dass im Bildsensor von den Sensorzellen erzeugte und gegebenenfalls verstärkte analoge Bildsignale, die den Bildsignalwerten zugrunde liegen, mit Hilfe von A/D-Wandlern digitalisiert werden. Aus den ausgelesenen Bildsignalwerten werden dann Bilddaten erzeugt, die insbesondere wegen möglicher Abweichungen der genannten festgestellten Eigenschaften von den kameramodell-generischen Eigenschaften fehlerbehaftet sein und Artefakte enthalten können und daher als vorläufige Bilddaten bezeichnet werden.

Das Erzeugen dieser vorläufigen Bilddaten kann insbesondere umfassen, dass die Bildsignalwerte zu einer Abfolge von Einzelbildern zusammengefasst werden. Dabei kann grundsätzlich schon eine gewisse Vorverarbeitung der Bildsignalwerte, wie etwa das Anwenden einer nicht-linearen Vorverstärkung (Präemphase), erfolgen. Ferner kann grundsätzlich auch eine Interpolation der genannten Art (Demosaicing) durchgeführt werden, wobei das nicht zwingend der Fall ist und die Interpolation auch zu einem späteren Zeitpunkt, insbesondere erst außerhalb der Kamera, durchgeführt werden kann. Vorzugsweise erfolgt beim Erzeugen der vorläufigen Bilddaten jedoch noch keine Korrektur von Fehlern und Artefakten, die aus den genannten Abweichungen resultieren.

Es bei einigen Ausführungsformen aber auch möglich, dass die vorläufigen Bilddaten (unter anderem) insofern vorläufig sind, als zumindest eine Korrektur (von gegebenenfalls mehreren insgesamt vorgesehenen Korrekturen) zwar erfolgt, aber nur unvollständig durchgeführt wird. Beispielsweise können zur Verschleierung von Abweichungen zwischen Verstärkern des Bildsensors, insbesondere Zeilen- oder Spaltenverstärkern, die Bildsignale einem Verwürfeln (sogenanntes Scrambling, das weiter unten noch ausführlicher beschrieben wird) unterzogen werden, bevor sie verstärkt werden, wobei die Korrektur dann noch unvollständig ist, bis das Verwürfeln nach dem Verstärken wieder umgekehrt wird (Descrambling).

Des Weiteren umfasst das Verfahren, dass die vorläufigen Bilddaten zusammen mit Metadaten, welche die kameraexemplar-spezifischen Daten umfassen oder zumindest eine Zuordnung der kameraexemplar-spezifischen Daten zu den vorläufigen Bilddaten erlauben, zu der externen Bildaufbereitungseinrichtung übertragen werden. Die Bildaufbereitungseinrichtung ist dabei insbesondere insofern eine externe Bildaufbereitungseinrichtung, als sie nicht in die Kamera integriert ist.

Die vorläufigen Bilddaten und die Metadaten können dabei direkt oder indirekt (über eine oder mehrere zwischengeschaltete Einrichtungen) von der Kamera zu der externen Bildaufbereitungseinrichtung übertragen werden. Die Übertragung kann kabelgebunden oder kabellos oder auch teilweise kabelgebunden und teilweise kabellos erfolgen. Es kommt auch eine Übertragung mittels eines oder mehrerer Datenträger in Betracht, auf welche die Daten (die vorläufigen Bilddaten und die Metadaten) gespeichert werden, so dass die Übertragung der Daten vom Aufzeichnen zeitlich entkoppelt sein kann. Auch wenn die Übertragung nicht über Datenträger, sondern über eine Datenverbindung erfolgt, müssen die Daten nicht unbedingt gleich nach ihrer Erzeugung übertragen werden, sondern es kann vorgesehen sein, dass die Daten zunächst in der Kamera zwischengespeichert werden.

Ferner kann vorgesehen sein, dass die Daten, insbesondere für ein jeweiliges Übertragen, komprimiert werden, wobei sie dann vor einer weiteren Bearbeitung vorzugsweise zunächst wieder dekomprimiert werden.

Die Metadaten können den Bilddaten speziell zugeordnet sein, sind jedoch nicht Teil der Bilddaten, sondern enthalten über die in den Bilddaten enthaltene Bildinformation hinausgehende Zusatzinformationen, nämlich insbesondere die genannten kameraexemplar-spezifischen Daten. Allerdings können die Metadaten insofern in die vorläufigen Bilddaten integriert sein, als sie mit den vorläufigen Bilddaten in einer einzelnen Datei oder einem einzelnen Datenstrom zusammengefasst sein können. Alternativ dazu können die Metadaten aber auch von den vorläufigen Bilddaten separat vorliegen und insofern gesondert übertragen werden. Dass die vorläufigen Bilddaten zusammen mit den Metadaten übertragen werden, meint daher nicht unbedingt, dass die vorläufigen Bilddaten und die Metadaten miteinander kombiniert übertragen werden, sondern insbesondere, dass sowohl die vorläufigen Bilddaten als auch die Metadaten zu der externen Bildaufbereitungseinrichtung, vorzugsweise gleichzeitig oder zeitlich zumindest aufeinanderfolgend, übertragen werden und dabei in Bezug zueinander stehen, beispielsweise indem die Metadaten einen Verweis auf die vorläufigen Bilddaten enthalten und/oder umgekehrt die vorläufigen Bilddaten einen Verweis auf die Metadaten enthalten.

Die Metadaten müssen die kameraexemplar-spezifischen Daten nicht unbedingt selbst umfassen. Denn es kann beispielsweise ausreichen, dass die Metadaten eine Identifikationsinformation über die Kamera (insbesondere des Bildsensors und/oder der Ausleseelektronik oder von Teilen hiervon) umfassen, d. h. eine Information, anhand welcher sich das für das Erzeugen der vorläufigen Bilddaten verwendete Kameraexemplar bzw. dessen Bildsensor eindeutig identifizieren lässt. Diese Identifikationsinformation kann dann dazu genutzt werden, in der externen Bildaufbereitungseinrichtung bereits vorliegende kameraexemplar-spezifische Daten den vorläufigen Bilddaten zuzuordnen oder die kameraexemplar-spezifischen Daten von anderswo zu beziehen, beispielsweise aus einer externen Datenbank auszulesen (was weiter unten noch ausführlicher beschrieben wird). Auf diese Weise können den vorläufigen Bilddaten also anhand der Metadaten die kameraexemplar-spezifischen Daten zugeordnet werden, ohne dass sie in den zusammen mit den vorläufigen Bilddaten übertragenen Metadaten selbst enthalten sein müssen.

Außerdem umfasst das Verfahren, dass die externe Bildaufbereitungseinrichtung aufbereitete Bilddaten erzeugt, indem auf die vorläufigen Bilddaten eine von den kameraexemplar-spezifischen Daten abhängige Korrektur angewandt wird. Die aufbereiteten Bilddaten werden also aus den übertragenen vorläufigen Bilddaten erzeugt, nämlich durch Anwenden einer Korrektur auf die vorläufigen Bilddaten, welche dazu dient, Fehler und Artefakte, die sich aus den genannten Abweichungen zwischen den festgestellten und den kameramodell-generischen Eigenschaften ergeben können, zu beseitigen. In diese Korrektur fließen die kameraexemplar-spezifischen Daten ein, die zusammen mit den vorläufigen Bilddaten übertragenen worden sind oder aber den vorläufigen Bilddaten zugeordnet worden sind, nachdem sie in der externen Bildaufbereitungseinrichtung bereits vorlegen haben oder von anderswo bezogenen worden sind; beispielsweise können die kameraexemplar-spezifischen Daten als Parameter in die jeweilige Korrektur einfließen. Sofern bereits beim Erzeugen der vorläufigen Bilddaten eine Korrektur erfolgt, jedoch nur unvollständig durchgeführt worden ist, kann das Anwenden der von den kameraexemplar-spezifischen Daten abhängigen Korrektur auch ein Vervollständigen dieser bis dahin unvollständigen Korrektur umfassen, wobei auch das bloße Vervollständigen vorzugsweise noch von den kameraexemplar-spezifischen Daten abhängig ist.

Dass die auf die vorläufigen Bilddaten angewandte Korrektur von den kameraexemplar-spezifischen Daten abhängig ist, hat dabei den zusätzlichen Vorteil, dass das Verfügen über die kameraexemplar-spezifischen Daten eine Voraussetzung für das Anwenden der Korrektur ist. Wenn die Metadaten die kameraexemplar-spezifischen Daten nicht unmittelbar umfassen, sondern lediglich eine Identifikationsinformation umfassen oder auf sonstige Weise eine Zuordnung der kameraexemplar-spezifischen Daten zu den vorläufigen Bilddaten erlauben, kann somit durch eine Beschränkung des Zugangs zu den kameraexemplar-spezifischen Daten vorteilhafterweise kontrolliert werden, wer die von den kameraexemplar-spezifischen Daten abhängige Korrektur anwenden kann, um aufbereitete Bilddaten höchster Qualität zu erzeugen. Beispielsweise kann für den Zugang zu den kameraexemplar-spezifischen Daten (ggf. neben der Identifikationsinformation zum Abrufen der richtigen, d. h. auf die jeweilige Kamera bezogenen, Daten) zusätzlich ein Zugangsschlüssel (z.B. ein Lizenzschlüssel) erforderlich sein. Oder es kann sichergestellt werden, dass die von den kameraexemplar-spezifischen Daten abhängige Korrektur grundsätzlich nur durch eine beschränkte Anzahl von Berechtigten, insbesondere nur durch den Kamerahersteller, durchgeführt werden kann. Die von den kameraexemplar-spezifischen Daten abhängige Korrektur kann somit in unterschiedlichen Berechtigungs- und Qualitätsstufen durchgeführt werden.

Nach dem Erzeugen der aufbereiteten Bilddaten können diese von der externen Bildaufbereitungseinrichtung dann ausgegeben werden.

Das Erzeugen der aufbereiteten Bilddaten ist nicht auf die genannte von den kameraexemplar-spezifischen Daten abhängige Korrektur beschränkt. Vielmehr kann das Erzeugen der aufbereiteten Bilddaten noch zusätzlich sonstige Bildbearbeitungs- und Bildaufbereitungsschritte umfassen, die von den kameraexemplar-spezifischen Daten unabhängig sein können. Insbesondere kann das Erzeugen der aufbereiteten Bilddaten, sofern die Bilddaten mehrere Farbkanäle umfassen und die vorläufigen Bilddaten noch nicht für jeden Bildpunkt der Bilddaten Werte in allen Farbkanälen umfassen, auch eine Interpolation (Demosaicing) umfassen, um für jeden Bildpunkt die Werte in denjenigen Farbkanälen zu ergänzen, in denen für den jeweiligen Bildpunkt noch keine Werte vorliegen. Eine solche Interpolation kann jedoch auch schon in der Kamera im Rahmen des Erzeugens der vorläufigen Bilddaten aus den Bildsignalwerten erfolgt und somit beim Erzeugen der aufbereiteten Bilddaten nicht mehr erforderlich sein. Darüber hinaus können die aufbereiteten Bilddaten grundsätzlich noch uninterpoliert sein, also zwar mehrere Farbkanäle aufweisen, für jeden Bildpunkt jedoch (etwa gemäß dem genannten Bayer-Filter) lediglich in einem jeweiligen der Farbkanäle einen Wert aufweisen.

Durch das erfindungsgemäße Verfahren braucht die Kamera vorteilhafterweise nicht dazu ausgebildet zu sein, vollständig aufbereitete Bilddaten höchster Qualität zu erzeugen, so dass der von der Kamera zu leistende Rechenaufwand vergleichsweise gering bleiben kann. Die Kamera kann dadurch gegenüber herkömmlichen Kameras eine reduzierte Komplexität aufweisen. Zugleich wird aber durch die Metadaten gewährleistet, dass außerhalb der Kamera, nämlich in der externen Bildaufbereitungseinrichtung, basierend auf den dazu erforderlichen kameraexemplar-spezifischen Daten die Bildaufbereitung durchgeführt bzw. vervollständigt werden kann, um mögliche Fehler oder Artefakte aufgrund von Abweichungen zwischen den tatsächlichen und den nominellen Eigenschaften des konkreten Kameraexemplars zu korrigieren und somit letztlich qualitativ hochwertige Bilddaten zu erhalten. Da die Metadaten, insbesondere die kameraexemplar-spezifischen Daten, dabei in der Regel global, d. h. für die Gesamtheit der mit dem jeweiligen Kameraexemplar aufgenommenen Bilddaten, gelten oder zumindest über die Zeit, beispielsweise für die Dauer einer jeweiligen Aufnahmesequenz, konstant bleiben, ist ihr Volumen im Vergleich zum Datenvolumen der Bilddaten gering, so dass durch die zusätzliche Übertragung der Metadaten selbst dann kein wesentlicher Zusatzaufwand entsteht, wenn die kameraexemplar-spezifischen Daten in den Metadaten direkt enthalten sind.

Die genannte, auf die vorläufigen Bilddaten angewandte Korrektur kann eine oder mehrere Arten einer Korrektur von Bilddaten (gegebenenfalls Rohbilddaten) umfassen. Beispielsweise kann eine Versatzkorrektur (sogenannte Offset-Korrektur) und/oder eine Verstärkungsfaktorkorrektur (sogenannte Gain-Korrektur) erfolgen, bei denen eine Verstärkung, die in das Auslesen der Bildsignalwerte und/oder das Erzeugen der vorläufigen Bilddaten aus den Bildsignalwerten einfließt, durch einen, insbesondere für jede Sensorzelle individuell vorgegebenen, Korrekturversatz bzw. Korrekturfaktor korrigiert wird.

Eine komplexere Korrektur kann umfassen, dass der Korrekturfaktor signalabhängig ist. Beispielsweise kann die Verstärkung der Bildsignalwerte der einzelnen Sensorzellen anhand einer nicht-linearen Kennlinie korrigiert werden, wobei die Parameter der Kennlinie vorzugsweise für jede Sensorzelle individuell vorgegebenen sind. Die verschiedenen Bildsignalwerte können dann mittels der für die jeweilige Sensorzelle individuellen Kennlinie transformiert werden.

Außerdem kann eine Korrektur erfolgen, durch die kompensiert wird, dass einzelne der Sensorzellen defekt sind, beispielsweise indem in den vorläufigen Bilddaten Werte von Bildpunkten, die einer defekten Sensorzelle entsprechen, durch geschätzte, etwa durch Interpolation aus Werten benachbarter Bildpunkte ermittelte, Werte ersetzt werden.

Insofern ist eine Ausführungsform der Erfindung vorteilhaft, bei der die kameraexemplar-spezifischen Daten Verstärkungs-Korrekturversatze der Sensorzellen, Verstärkungs-Korrekturfaktoren der Sensorzellen, Parameter nicht-linearer Kennlinien der Sensorzellen und/oder Statusinformationen über defekte Sensorzellen umfassen. Ein Verstärkungs-Korrekturversatz bzw. -Korrekturfaktor einer jeweiligen Sensorzelle ist dabei ein Versatz bzw. Faktor zur Korrektur einer Verstärkung, die in das Auslesen eines mittels der jeweiligen Sensorzelle erzeugten Bildsignalwerts oder in das Erzeugen der vorläufigen Bilddaten (unter anderem) aus diesem Bildsignalwert einfließt und unter Umständen infolge der genannten möglichen Abweichungen zwischen den festgestellten und den kameramodell-generischen Eigenschaften fehlerhaft ist.

Alternativ oder zusätzlich zur Anwendung eines Verstärkungs-Korrekturversatzes oder eines Verstärkungs-Korrekturfaktors kann auf die Bildsignalwerte mittels einer, vorzugsweise für jede Sensorzelle individuell definierten, Kennlinie auch eine nicht-lineare Korrektur angewandt werden. Hierdurch kann auf die Bildsignalwerte des Bildsensors bzw. auf die hieraus erzeugten vorläufigen Bilddaten eine signalabhängige Korrektur angewandt werden. Eine solche Kennlinie kann verschiedenen Bildsignalwerten jeweils einen modifizierten Bildsignalwert zuordnen und entspricht insofern einer (nicht-linearen) Transformation der Bildsignalwerte. Dabei kann die jeweilige Kennlinie etwa als Funktion oder als Lookup-Tabelle definiert sein, die vorzugsweise auf den Ergebnissen einer Kalibrierung des jeweiligen Bildsensors beruht. Um für sämtliche Sensorzellen eine individuelle Kennlinie definieren zu können und dennoch die Menge der kameraexemplar-spezifischen Daten gering zu halten, kann die Kennlinie für alle Sensorzellen teilweise gleich definiert sein, etwa indem (zur Annäherung an das Ergebnis der Kalibrierung) Stützpunkte der Kennlinie ermittelt werden, die für alle Sensorzellen identisch sind und auf die die Kennlinien der Sensorzellen daher sozusagen "eingeschnürt" werden. Die Kennlinien sind vorzugsweise aber zumindest teilweise auch durch sensorzellen-individuelle Parameter definiert, durch die insbesondere der Verlauf der jeweiligen Kennlinie zwischen zwei jeweiligen Stützpunkten für jede Sensorzelle individuell vorgegeben sein kann.

Die Verstärkungs-Korrekturversatze und die Verstärkungs-Korrekturfaktoren bzw. die sensorzellen-individuellen Parameter der nicht-linearen Kennlinien brauchen dabei nur für diejenigen Sensorzellen vorzuliegen, die nicht gemäß der genannten Statusinformation defekt sind. Vorzugsweise liegt für jede Sensorzelle gesondert die jeweilige Information vor, beispielsweise in Form einer Matrix, die der Anordnung der Sensorzellen in dem Bildsensor entspricht. Somit kann insbesondere für jede Sensorzelle bekannt sein, ob sie defekt ist, und, sofern sie es nicht ist, mit welchem Verstärkungs-Korrekturversatz und mit welchem Verstärkungs-Korrekturfaktor bzw. gemäß welcher nicht-linearen Kennlinie ein von der jeweilige Sensorzelle erzeugter Bildsignalwert oder ein daraus abgeleiteter Wert der vorläufigen Bilddaten korrigiert werden soll.

Gemäß einer weiteren vorteilhaften Ausführungsform umfassen die Metadaten zusätzlich aufnahme-spezifische Daten über Betriebsbedingungen, die während des Erzeugens der Bildsignalwerte vorgelegen haben und die zumindest geeignet sind, einen Einfluss auf das Erzeugen der Bildsignalwerte zu haben, oder die tatsächlich einen Einfluss auf das Erzeugen der Bildsignalwerte haben, wobei die genannte Korrektur zusätzlich von den aufnahme-spezifischen Daten abhängt. Die Metadaten können insbesondere aufnahme-spezifische Daten über Abweichungen der Betriebsbedingungen von Standardbedingungen, in Bezug auf welche die genannten kameramodell-generischen (nominellen) Eigenschaften definiert sind, umfassen.

Bei den aufnahme-spezifischen Daten kann es sich insbesondere um physikalische Größen handeln, welche die Umstände des Erzeugens der Bildsignalwerte beschreiben. Ein Beispiel für aufnahme-spezifische Daten ist etwa die Temperatur, insbesondere die Temperatur des Bildsensors und/oder der Ausleseelektronik, während des Erzeugens der Bildsignalwerte, die etwa einen Einfluss auf ein Rauschen des Bildsensors und/oder allgemein auf den Zusammenhang zwischen der Intensität des auf eine jeweilige Sensorzelle auftreffenden Lichts und dem von der jeweiligen Sensorzelle in Reaktion hierauf erzeugten Bildsignalwert haben kann. Des Weiteren können auch der atmosphärische Druck und/oder ein mechanischer Stress (statische Kraftbeaufschlagung) und/oder Beschleunigungswerte (dynamische Kraftbeaufschlagung) einen Einfluss auf das Erzeugen der Bildsignalwerte haben.

Gemäß einer weiteren vorteilhaften Ausführungsform umfasst das Bereitstellen der kameraexemplar-spezifischen Daten, dass die kameraexemplar-spezifischen Daten in einer Datenbank hinterlegt sind, wobei die an die externe Bildaufbereitungseinrichtung übertragenen Metadaten eine Identifikationsinformation über die Kamera oder Teile hiervon, insbesondere den Bildsensor und/oder die Ausleseelektronik, umfassen. Bei einer solchen Ausführungsform umfasst das Verfahren, dass die externe Bildaufbereitungseinrichtung anhand der Identifikationsinformation die kameraexemplar-spezifischen Daten aus der Datenbank ausliest und den übertragenen vorläufigen Bilddaten zuordnet. Bei der Identifikationsinformation kann es sich beispielsweise eine oder mehrere Seriennummern der Kamera oder einer Komponente hiervon, insbesondere des Bildsensor, der Ausleseelektronik und/oder einer sonstigen Elektronik-Komponente der Kamera, wie etwa einer relevanten Platine, handeln.

In diesem Fall brauchen die Metadaten die kameraspezifischen Daten also nicht direkt zu umfassen, da sie sich aus der Datenbank beziehen lassen. Konkret kann anhand der als Teil der Metadaten übertragenen Identifikationsinformation das für das Erzeugen der vorläufigen Bilddaten verwendete Kameraexemplar bzw. dessen Bildsensor oder dessen Ausleseelektronik identifiziert werden, so dass die für dieses Kameraexemplar spezifischen Daten aus der Datenbank ausgelesen und den vorläufigen Bilddaten zugeordnet werden können. Anschließend kann dann auf die vorläufigen Bilddaten eine von diesen kameraexemplar-spezifischen Daten abhängige Korrektur angewandt werden. Die kameraexemplar-spezifischen Daten können in einem solchen Fall, beispielsweise durch einen Hersteller der Kamera, einmalig im Rahmen einer Kalibrierung für das jeweilige Kameraexemplar festgestellt und in der Datenbank hinterlegt worden sein.

Gemäß einer vorteilhaften Weiterbildung einer solchen Ausführungsform setzt das Auslesen der kameraexemplar-spezifischen Daten aus der Datenbank einen im Rahmen einer Benutzereingabe empfangenen Nachweis einer Ausleseberechtigung voraus. Die externe Bildaufbereitungseinrichtung kann insbesondere dazu ausgebildet sein, Benutzereingaben zu empfangen, um auf diese Weise den Nachweis der Ausleseberechtigung zu empfangen. Allerdings muss die Benutzereingabe nicht unbedingt unmittelbar an der externen Bildaufbereitungseinrichtung eingegeben werden, sondern die externe Bildaufbereitungseinrichtung kann sie auch durch Übertragung von einer anderen Vorrichtung, an der sie eingegeben wurde, empfangen. Bei dem Nachweis kann es sich beispielsweise um ein Passwort oder einen Lizenzschlüssel handeln. Grundsätzlich ist aber auch denkbar, dass bereits die Kenntnis der genannten Identifikationsinformation über die Kamera, den Bildsensor und/oder die Ausleseelektronik als Nachweis der Ausleseberechtigung angesehen wird.

Der Nachweis kann als Teil der Benutzereingabe von der externen Bildaufbereitungseinrichtung empfangen werden. Beispielweise kann die Benutzereingabe darin bestehen, dass zunächst das Erzeugen der aufbereiteten Bilddaten angefordert und anschließend der Nachweis der Ausleseberechtigung eingegeben wird. Der Nachweis kann aber auch vorab in der externen Bildaufbereitungseinrichtung hinterlegt sein und auf diese Weise im Rahmen einer späteren Benutzereingabe (Anforderung aufbereiteter Bilddaten) vorliegen.

Eine Überprüfung der Ausleseberechtigung anhand des Nachweises kann beispielsweise direkt in der externen Bildaufbereitungseinrichtung oder in der Datenbank erfolgen. Mit anderen Worten: Die externe Bildaufbereitungseinrichtung kann dazu ausgebildet sein, den Nachweis der Ausleseberechtigung zu prüfen und die kameraexemplar-spezifischen Daten nur dann aus der Datenbank auszulesen, wenn die Ausleseberechtigung durch die Prüfung bestätigt wird; alternativ oder ergänzend dazu kann vorgesehen sein, dass (auch) in der Datenbank eine Prüfung des Nachweises der Ausleseberechtigung erfolgt und das Auslesen der kameraexemplar-spezifischen Daten aus der Datenbank nur zugelassen wird, wenn die Ausleseberechtigung durch die Prüfung bestätigt wird. Auf diese Weise kann insbesondere das Erzeugen (vollständig) aufbereiteter Bilddaten höchster Qualität daran geknüpft werden, dass ein jeweiliger Nutzer über einen Nachweis der Ausleseberechtigung verfügt. So kann vorteilhafterweise eine unberechtigte Nutzung der Bilddaten zumindest mit hoher Qualität verhindert werden. Zugleich kann aber vorgesehen sein, dass teilaufbereitete Bilddaten geringerer Qualität auch ohne den genannten Nachweis erhalten werden können.

Gemäß einer weiteren vorteilhaften Ausführungsform umfasst das Verfahren ferner, dass in der Kamera oder von der externen Bildaufbereitungseinrichtung teilaufbereitete Bilddaten erzeugt werden. Nach dem Erzeugen der teilaufbereiteten Bilddaten können diese von der Kamera bzw. von der externen Bildaufbereitungseinrichtung ausgegeben werden.

Die teilaufbereiteten Bilddaten können erzeugt werden, indem auf einen Teil der vorläufigen Bilddaten eine von den kameraexemplar-spezifischen Daten abhängige Korrektur angewandt wird. Auf den übrigen Teil der Bilddaten wird diese Korrektur dagegen nicht oder zumindest nicht vollständig angewandt. Dieser übrige Teil kann in die teilaufbereiteten Bilddaten dann entweder ohne die Korrektur bzw. mit der unvollständigen Korrektur oder aber gar nicht eingehen (also in den teilaufbereiteten Bilddaten einfach fehlen), wobei letzteres bevorzugt ist.

Beispielsweise kann sich die Korrektur auf eine Teilmenge der Bildpunkte eines jeweiligen Einzelbildes der Bilddaten beschränken. Die Teilmenge kann einem, insbesondere zentralen, Ausschnitt des jeweiligen Einzelbildes entsprechen. Wenn es sich bei den Bilddaten um Bewegtbilddaten handelt, die eine Abfolge mehrerer Einzelbilder umfassen, kann es sich für alle Einzelbilder um denselben Ausschnitt handeln, d. h. der jeweilige Ausschnitt weist für jedes der Einzelbilder dieselbe Position und dieselben Maße auf.

Die Teilmenge der Bilddaten, auf die eine Korrektur angewandt wird, kann auch durch räumliche Unterabtastung gebildet werden, insbesondere dadurch, dass nur die Bildpunkte jeder n-ten Zeile und jeder m-ten Spalte eines jeweiligen Einzelbildes korrigiert und die übrigen Bildpunkt nicht korrigiert oder weggelassen werden (wobei n und m positive ganze Zahlen und vorzugsweise identisch sind). Die teilaufbereiteten Bilddaten weisen dann - im Falle des Weglassens von Bilddaten - eine im Vergleich zur Auflösung der (vollständig) aufbereiteten Bilddaten bzw. zur Auflösung, mit der die Bilddaten aufgezeichnet worden sind, reduzierte Auflösung auf.

Im Falle von Bewegtbilddaten kann die Teilmenge der Bilddaten, auf die eine Korrektur angewandt wird, auch durch zeitliche Unterabtastung gebildet werden, insbesondere dadurch, dass nur jedes n-te Einzelbild korrigiert und die übrigen Einzelbilder nicht korrigiert oder weggelassen werden (wobei n eine positive ganze Zahl ist). Die teilaufbereiteten Bilddaten weisen dann - im Falle des Weglassens von Einzelbildern - eine im Vergleich zur Bildrate der (vollständig) aufbereiteten Bilddaten bzw. zur Bildrate, mit der die Bilddaten aufgezeichnet worden sind, reduzierte Bildrate auf.

Insbesondere können bei einigen Ausführungsformen die vorläufigen Bilddaten einer Bewegtbildsequenz entsprechen, die eine Abfolge mehrerer Einzelbilder umfasst, wobei die teilaufbereiteten Bilddaten erzeugt werden, indem lediglich auf einen Teil der vorläufigen Bilddaten, der einer Teilmenge der mehreren Einzelbilder entspricht, eine von den kameraexamplar-spezifischen Daten abhängige Korrektur angewandt wird, während auf den übrigen Teil der vorläufigen Bilddaten, der den weiteren der mehreren Einzelbilder entspricht, eine solche Korrektur nicht angewandt wird. Bei derartigen Ausführungsformen kann die Teilmenge der mehreren Einzelbilder einer ersten Bildrate der Bewegtbildsequenz entsprechen, wobei die Gesamtheit der mehreren Einzelbilder einer höheren zweiten Bildrate der Bewegtbildsequenz entspricht. Somit können die teilaufbereiteten Bilddaten beispielsweise an einer Monitorvorrichtung mit einer relativ niedrigen Bildrate wiedergegeben werden, während für eine Wiedergabe oder Weiterverarbeitung der vorläufigen Bilddaten mit einer relativ höheren Bildrate eine vollständige Aufbereitung der Bilddaten anhand der kameraexemplar-spezifischen Daten voraussetzt.

Zwei oder mehrere dieser Möglichkeiten können auch kombiniert sein. Die teilaufbereiteten Bilddaten können also im Vergleich zu den (vollständig) aufbereiteten Bilddaten auf einen Ausschnitt beschränkt sein, eine reduzierte Auflösung und/ oder eine reduzierte Bildrate aufweisen.

Dabei ist es bevorzugt, wenn der Teil der vorläufigen Bilddaten, auf den die Korrektur angewandt wird, einstellbar ist, etwa indem als Vorgabe für die teilaufbereiteten Bilddaten ein jeweiliger Ausschnitt, eine Auflösung und/oder eine Bildrate entweder aus mehreren vorgegebenen Möglichkeiten oder frei gewählt werden kann/können.

Vorzugsweise handelt es sich bei der Korrektur, die zur Erzeugung der teilaufbereiteten Bilddaten auf einen Teil der vorläufigen Bilddaten angewandt wird, um die genannte von den kameraexemplar-spezifischen Daten abhängige Korrektur, die auch von der externen Bildaufbereitungseinrichtung zur Erzeugung der (vollständig) aufbereiteten Bilddaten auf die vorläufigen Bilddaten angewandt wird. Beim Erzeugen der teilaufbereiteten Bilddaten wird der Teil der vorläufigen Bilddaten also nicht schlechter korrigiert als beim Erzeugen der (vollständig) aufbereiteten Bilddaten, sondern die Korrektur ist in beiden Fällen umfassend. Der Unterschied besteht zumindest im Wesentlichen lediglich darin, dass die Korrektur im einen Fall auf alle vorläufigen Bilddaten und im anderen Fall nur auf einen Teil davon oder teilweise angewandt wird.

Sofern in der Kamera oder von der externen Bildaufbereitungseinrichtung teilaufbereitete Bilddaten erzeugt werden, kann die externe Bildaufbereitungseinrichtung zu einem späteren Zeitpunkt die (vollständig) aufbereiteten Bilddaten erzeugen, indem auf die vorläufigen Bilddaten (in der von der Kamera erzeugten Form oder in der teilaufbereiteten Form) die von den kameraexemplar-spezifischen Daten abhängige Korrektur angewandt wird.

Wenn teilaufbereitete Bilddaten erzeugt worden sind, kann sich das Erzeugen der (vollständig) aufbereiteten Bilddaten vorteilhafterweise darauf beschränken, die Korrektur auch auf den übrigen Teil der vorläufigen Bilddaten anzuwenden und das Ergebnis mit den teilaufbereiteten Bilddaten zu kombinieren, um insgesamt die (vollständig) aufbereiteten Bilddaten zu erhalten. Das ist aber nicht zwingend der Fall, denn es ist auch denkbar, dass für das Erzeugen der (vollständig) aufbereiteten Bilddaten die teilaufbereiteten Bilddaten nicht genutzt werden, sondern die externe Bildaufbereitungseinrichtung die Korrektur unabhängig von den teilaufbereiteten Bilddaten auf die gesamten vorläufigen Bilddaten anwendet.

Die teilaufbereiteten Bilddaten können im Vergleich zu den (vollständig) aufbereiteten Bilddaten mit geringerem Rechenaufwand erzeugt werden, was insbesondere für ihre Erzeugung in der Kamera vorteilhaft ist. Die teilaufbereiteten Bilddaten können beispielsweise dazu dienen, dass ohne übermäßigen Aufwand der Verlauf oder das Ergebnis einer Aufzeichnung von Bilddaten unmittelbar an der Kamera oder an einer daran angeschlossenen Anzeigevorrichtung begutachtet werden kann. Das Erzeugen der (vollständig) aufbereiteten Bilddaten außerhalb der Kamera kann dann an den Nachweis einer Berechtigung, insbesondere der genannten Ausleseberechtigung für die kameraexemplar-spezifischen Daten, geknüpft sein. Auf diese Weise kann das Erzeugen hochqualitativer Bilddaten von dem Vorliegen einer Berechtigung, insbesondere in Form eines Lizenzschlüssels, abhängig gemacht werden, ohne dass die Möglichkeit, den Verlauf oder das Ergebnis einer Aufzeichnung unmittelbar zu prüfen, beeinträchtigt würde.

Alternativ oder ergänzend dazu, die teilaufbereiteten Bilddaten dadurch zu erzeugen, dass eine Korrektur (nur) auf einen Teil der vorläufigen Bilddaten angewandt wird, können die teilaufbereiteten Bilddaten auch durch dadurch erzeugt werden, dass eine andere, insbesondere einfachere, Korrektur als für das Erzeugen der (vollständig) aufbereiteten Bilddaten auf die vorläufigen Bilddaten angewandt wird (sei es auf alle vorläufigen Bilddaten oder nur auf einen Teil davon). Insbesondere können in der Kamera oder von der externen Bildaufbereitungseinrichtung teilaufbereitete Bilddaten erzeugt werden, indem auf die vorläufigen Bilddaten eine vereinfachte Korrektur angewandt wird, die von den kameraexemplar-spezifischen Daten unabhängig ist oder die im Vergleich zu der genannten, für das Erzeugen der (vollständig) aufbereiteten Bilddaten angewandten, Korrektur in geringerem Umfang von den kameraexemplar-spezifischen Daten abhängt.

Die vereinfachte Korrektur kann bei einigen Ausführungsformen insbesondere gerade insofern vereinfacht sein, als sie von den kameraexemplar-spezifischen Daten unabhängig ist.

Bei anderen Ausführungsformen kann die vereinfachte Korrektur im Vergleich zu der genannten (umfassenden) Korrektur in geringerem Umfang von den kameraexemplar-spezifischen Daten abhängen. Die vereinfachte Korrektur kann insbesondere von einer im Vergleich zu der genannten (umfassenden) Korrektur geringeren Anzahl kameraexemplar-spezifischen Daten abhängen. Sie kann aber auch insofern vereinfacht sein, als sie sich auf eine Korrektur geringerer Komplexität als die genannte (umfassende) Korrektur beschränkt, etwa indem die Korrektur mit Parametern geringerer Ergebnisqualität durchgeführt wird und/oder eine oder mehrere Teile der Korrektur einfach weggelassen werden. Dabei können in die vereinfachte Korrektur grundsätzlich alle kameraexemplar-spezifischen Daten einfließen, die auch insgesamt in die genannte (umfassende) Korrektur einfließen.

Vorzugsweise ist der Grad, um den die vereinfachte Korrektur im Vergleich zu der genannten (vollständigen) Korrektur in geringerem Umfang von den kameraexemplar-spezifischen Daten abhängt, einstellbar. In einem solchen Fall kann mit anderen Worten also eingestellt werden, wie sehr die teilaufbereiteten Bilddaten bereits aufbereitet sein sollen. Die Spanne kann sich dabei von minimal teilaufbereitet bis zu nahezu vollständig aufbereitet erstrecken. Grundsätzlich ist auch denkbar, dass wahlweise eingestellt werden kann, dass die Bildaufbereitungseinrichtung direkt vollständig aufbereitete Bilddaten erzeugt. Je nach verwendetem Korrekturverfahren kann der genannte Grad der Aufbereitung quasikontinuierlich oder sogar kontinuierlich einstellbar sein.

Sofern die vereinfachte Korrektur von den kameraexemplar-spezifischen Daten sogar unabhängig ist, kann sie sich beispielsweise auf eine bloße Interpolation (Demosaicing) beschränken, durch die für jeden Bildpunkt der Bilddaten aus Werten benachbarter Bildpunkte Werte in denjenigen Farbkanälen berechnet werden, in denen für diesen Bildpunkt noch keine Werte vorliegen.

Die durch die vereinfachte Korrektur erzeugten teilaufbereiteten Bilddaten weisen aufgrund der fehlenden oder geringeren Berücksichtigung der kameraexemplar-spezifischen Daten in der Regel eine geringere Qualität als die (vollständig) aufbereiteten Bilddaten auf. Auch die teilaufbereiteten Bilddaten, die durch Korrektur nur eines Teils der vorläufigen Bilddaten erzeugt worden sind, sind im Vergleich zu den (vollständig) aufbereiteten Bilddaten in ihrer Qualität reduziert, da in diesem Fall nicht alle vorläufigen Bilddaten (umfassend) korrigiert worden sind. Insofern sind die teilaufbereiteten Bilddaten in beiden Fällen im Hinblick auf das letztlich, etwa für eine Projektion auf eine Kinoleinwand, zu erzeugende Bild höchster Qualität in der Regel ungenügend. Allerdings können die teilaufbereiteten Bilddaten beispielsweise dazu dienen, mit vergleichsweise geringem Aufwand Kontrollbilder zu erzeugen, die (etwa als digitales Sucherbild) bereits während oder kurz nach einer Aufzeichnung von Bilddaten zur Überprüfung des Bildinhalts, insbesondere der gelungenen Verwirklichung visuell-gestalterischer Ziele, genutzt werden können. Außerdem können die teilaufbereiteten Daten in Form sogenannter Proxies für vorgezogene Schnittentscheidungen verwendet werden, während der letztendliche Schnitt später anhand der (vollständig) aufbereiteten Bilddaten höchster Qualität durchgeführt wird.

Sofern teilaufbereitete Bilddaten erzeugt werden, können diese auch für das genannte Erzeugen der (vollständig) aufbereiteten Bilddaten genutzt werden, indem auf die durch die vereinfachte Korrektur erzeugten teilaufbereiteten Bilddaten noch zusätzlich eine von den kameraexemplar-spezifischen Daten abhängige ergänzende Korrektur angewandt wird. Das Erzeugen der (vollständig) aufbereiteten Bilddaten ist dann also mindestens zweistufig, da die insgesamt auf die vorläufigen Bilddaten angewandte Korrektur zumindest zum einen die vereinfachte Korrektur sowie zum anderen die ergänzende Korrektur umfasst. Es können auch mehr als zwei Stufen vorgesehen sein, wobei vorzugsweise die Anzahl der Stufen einstellbar ist und/oder einstellbar ist, bis zu welcher Stufe sich die vereinfachte Korrektur erstrecken soll. Ferner kann das Erzeugen der (vollständig) aufbereiteten Bilddaten von dem Erzeugen teilaufbereiteter Bilddaten grundsätzlich auch unabhängig sein.

Gemäß einer vorteilhaften Weiterbildung der vorstehenden Ausführungsform ist die externe Bildaufbereitungseinrichtung dazu ausgebildet, Benutzereingaben zu empfangen, wobei die externe Bildaufbereitungseinrichtung in Reaktion auf eine erste Benutzereingabe die aufbereiteten Bilddaten erzeugt und/oder (sofern die aufbereiteten Bilddaten zuvor bereits erzeugt worden sind) ausgibt und in Reaktion auf eine von der ersten Benutzereingabe verschiedene zweite Benutzereingabe die teilaufbereiteten Bilddaten erzeugt und/oder (sofern die teilaufbereiteten Bilddaten zuvor bereits erzeugt worden sind) ausgibt. Je nachdem, ob die externe Bildaufbereitungseinrichtung die erste Benutzereingabe oder die zweite Benutzereingabe empfängt, werden also die durch die von den kameraexemplar-spezifischen Daten abhängige Korrektur erzeugten (vollständig) aufbereiteten Bilddaten oder aber die durch die von den kameraexemplar-spezifischen Daten unabhängige oder in geringerem Umfang abhängige vereinfachte Korrektur erzeugten teilaufbereiteten Bilddaten erzeugt und/oder ausgegeben.

Die Bezeichnung der Benutzereingaben als erste und zweite Benutzereingabe ist dabei nicht zeitlich oder im Sinne einer Rangordnung zu verstehen, sondern dient der begrifflichen Unterscheidung der beiden Benutzereingaben, die sich hinsichtlich ihrer Art und/oder ihres Inhalts unterscheiden können. Zumindest die erste Benutzereingabe kann dabei erforderlichenfalls den genannten Nachweis der Ausleseberechtigung umfassen.

Es können auch noch mehr Benutzereingaben als lediglich die erste und die zweite Benutzereingabe unterschieden werden, in Reaktion auf welche die externe Bildaufbereitungseinrichtung jeweils teilaufbereitete Bilddaten erzeugt und/oder ausgibt und die sich von der zweiten Benutzereingabe sowie untereinander dadurch unterscheiden, dass in jeweils verschiedenem Maße teilaufbereitete Bilddaten erzeugt und/oder ausgegeben werden, beispielsweise indem auf die vorläufigen Bilddaten eine jeweils andere vereinfachte Korrektur angewandt wird. Die verschiedenen vereinfachten Korrekturen können sich insbesondere in Bezug darauf unterscheiden, ob und gegebenenfalls von welchen und/oder wie vielen kameraexemplar-spezifischen Daten sie abhängig sind. Auf diese Weise kann wahlweise der Grad der Aufbereitung der Bilddaten und somit die Qualität des jeweils resultierenden Bildes durch eine entsprechende Benutzereingabe dem jeweiligen Bedarf angepasst werden.

Gemäß einer vorteilhaften Weiterbildung werden die teilaufbereiteten Bilddaten (sei es in der Kamera oder von der externen Bildaufbereitungseinrichtung) fortlaufend erzeugt und an eine Monitorvorrichtung ausgegeben, an der sie fortlaufend angezeigt werden. Insbesondere können fortlaufend in der Kamera vorläufige Bilddaten erzeugt werden, aus denen entweder in der Kamera teilaufbereitete Bilddaten erzeugt werden oder die an die externe Bildaufbereitungseinrichtung übertragen werden, wo aus ihnen teilaufbereitete Bilddaten erzeugt werden; die teilaufbereiteten Bilddaten werden dann ebenfalls fortlaufend an eine Monitorvorrichtung ausgegeben, wo sie schließlich angezeigt werden. Bei der Monitorvorrichtung kann es sich um eine von der Kamera separate Vorrichtung oder auch um eine in die Kamera, beispielsweise in Form eines digitalen Suchers, integrierte Vorrichtung handeln.

Durch die fortlaufende Verarbeitung der Bilddaten kann das an der Monitorvorrichtung angezeigte Bild ein Live-Bild sein, das während der Aufnahme einer Bewegtbildsequenz (d. h. einer Abfolge mehrerer Einzelbilder) eine Überwachung und sofortige Kontrolle der aufgenommenen Bildinhalte ermöglicht. Da hierfür die Bilddaten nicht vollständig aufbereitet zu sein brauchen, reicht es aus, wenn lediglich teilaufbereitete Bilddaten fortlaufend erzeugt und an die Monitorvorrichtung ausgegeben werden. Die (vollständig) aufbereiteten Bilddaten brauchen dabei nicht ebenfalls fortlaufend erzeugt zu werden, sondern können auch erst zu einem späteren Zeitpunkt, etwa im Rahmen der allgemeinen Nachbearbeitung (Postproduktion) der Bilddaten, erzeugt werden.

Grundsätzlich unabhängig von den vorstehenden Ausführungsformen kann das Verfahren gemäß einer weiteren vorteilhaften Ausführungsform ferner umfassen, dass die vorläufigen Bilddaten fortlaufend (von der Kamera) an die externe Bildaufbereitungseinrichtung übertragen werden, während in der Kamera fortlaufend weitere vorläufige Bilddaten erzeugt werden. Mit anderen Worten werden während der Aufnahme einer Bewegtbildsequenz (Abfolge mehrerer Einzelbilder), bei der in der Kamera fortlaufend vorläufige Bilddaten erzeugt werden, diese vorläufigen Bilddaten kontinuierlich, insbesondere in Realzeit, an die externe Bildaufbereitungseinrichtung übertragen. Insbesondere können die vorläufigen Bilddaten dabei fortlaufend zusammen mit den genannten Metadaten, welche die kameraexemplar-spezifischen Daten umfassen oder zumindest eine Zuordnung der kameraexemplar-spezifischen Daten zu den vorläufigen Bilddaten erlauben, an die externe Bildaufbereitungseinrichtung übertragen werden. Es kann aber auch ausreichen, wenn diese Metadaten während einer Aufnahme einer Bewegtbildsequenz lediglich einmal, beispielsweise am Anfang der Aufnahme, an die externe Bildaufbereitungseinrichtung übertragen werden.

Gemäß einer weiteren vorteilhaften Ausführungsform umfasst die externe Bildaufbereitungseinrichtung eine On-Set-Recheneinheit, die mit der Kamera über eine lokale, vorzugsweise hochbandbreitige, Datenverbindung verbunden ist. Eine solche hochbandbreitige Datenverbindung kann beispielsweise durch Datenübertragungsraten von zumindest 1 Gbit/s, vorzugsweise von zumindest 10 Gbit/s, insbesondere von zumindest 100 Gbit/s, gekennzeichnet sein und etwa durch ein lokales Netzwerk (LAN; *Local Area Network*) bereitgestellt werden. Bei dem lokalen Netzwerk kann es sich um ein kabelgebundenes Netzwerk, beispielsweise über Ethernet, um ein kabelloses Netzwerk (WLAN; *Wireless Local Area Network*), beispielsweise gemäß einer der Normen der Normenfamilie IEEE 802.11, oder um ein teilweise kabelgebundenes und teilweise kabelloses Netzwerk handeln. Grundsätzlich kann die lokale, hochbandbreitige Datenverbindung aber auch durch Übertragung mittels eines Speichermediums, z. B. durch einen Magazin-Tausch, verwirklicht werden.

Die On-Set-Recheneinheit befindet sich vorteilhafterweise in räumlicher Nähe zur Kamera. Insofern kann es sich bei der On-Set-Recheneinheit insbesondere um einen Edge-Server handeln. Insbesondere kann es sich um eine Recheneinheit handeln, die am Set einer Aufnahme betrieben wird. Für die von der On-Set-Recheneinheit durchgeführten Berechnungen, insbesondere das Anwenden der genannten Korrektur, kann die On-Set-Recheneinheit einen integrierten Schaltkreis (IC), einen Mikroprozessor, eine zentrale Recheneinheit (CPU), eine Grafikprozessoreinheit (GPU), eine Anwendungsspezifische Integrierte Schaltung (ASIC) und/ oder ein Field Programmable Gate Array (FPGA) umfassen oder zumindest im Wesentlichen dadurch gebildet sein.

Dabei ist es bevorzugt, dass die On-Set-Recheneinheit die aufbereiteten Bilddaten erzeugt und/oder ausgibt. Des Weiteren kann vorgesehen sein, dass die On-Set-Recheneinheit alternativ oder zusätzlich dazu die genannten teilaufbereiteten Bilddaten bzw. verschiedene (in verschiedenem Maße) teilaufbereitete Bilddaten erzeugt und/oder ausgibt. Die On-Set-Recheneinheit kann dabei dazu ausgebildet sein, die aufbereiteten und/oder die teilaufbereiteten Bilddaten automatisch zu erzeugen und/oder auszugeben. Es kann aber auch vorgesehen sein, dass die On-Set-Recheneinheit die aufbereiteten und/oder die teilaufbereiteten Bilddaten in Reaktion auf eine jeweilige Benutzereingabe erzeugt und/oder ausgibt.

Eine weitere Aufgabe der On-Set-Recheneinheit kann darin bestehen, dass die in der Kamera erzeugten vorläufigen Bilddaten vor dem Erzeugen der aufbereiteten bzw. der teilaufbereiteten Bilddaten in der On-Set-Recheneinheit zwischengespeichert werden. Zu einem späteren Zeitpunkt können aus den zwischengespeicherten vorläufigen Bilddaten dann die aufbereiteten bzw. die teilaufbereiteten Bilddaten erzeugt werden, so dass das Erzeugen der aufbereiteten bzw. der teilaufbereiteten Bilddaten von dem Erzeugen der vorläufigen Bilddaten zeitlich entkoppelt sein kann. Die in der On-Set-Recheneinheit zwischengespeicherten vorläufigen Bilddaten können zu einem späteren Zeitpunkt auch zu einer Recheneinheit und/ oder einem Speicher einer (nachstehend ausführlicher beschriebenen) Cloud-Infrastruktur übertragen werden, um dort weiterverarbeitet, insbesondere aufbereitet, bzw. wiederum (vorerst) zwischengespeichert zu werden.

Gemäß einer weiteren vorteilhaften Ausführungsform umfasst die externe Bildaufbereitungseinrichtung eine Cloud-Infrastruktur. Eine solche Cloud-Infrastruktur kann insbesondere eine verteilte Anordnung von Bildverarbeitungs- und Speichervorrichtungen (z.B. mehrere verteilt angeordnete Server) umfassen, die eine jeweilige Bildverarbeitungs- bzw. Speicherkapazität zur Cloud-Infrastruktur beitragen. Auf diese Weise können Bilddaten einschließlich Metadaten in die Cloud-Infrastruktur übertragen werden, in der anhand der Metadaten kameraexemplar-spezifische Daten ermittelt, insbesondere aus einem Speicher (z. B. einer Datenbank) ausgelesen werden und dann für das Erzeugen der aufbereiteten Bilddaten herangezogen werden. Nach dem Erzeugen können die aufbereiteten Bilddaten schließlich aus der Cloud-Infrastruktur ausgegeben bzw. abgerufen werden. Die Cloud-Infrastruktur ist dabei von der Kamera entfernt, also zumindest räumlich getrennt, angeordnet. Allerdings kann sich zumindest ein Teil der Cloud-Infrastruktur grundsätzlich auch am Produktionsstandort, an dem die Bilddaten aufgezeichnet werden, befinden.

Unabhängig davon, wo sich die Cloud-Infrastruktur bzw. die verschiedenen Teile der Cloud-Infrastruktur befindet/befinden, ist die Kamera mit der Cloud-Infrastruktur verbunden, um Bilddaten sowie gegebenenfalls weitere Daten, wie etwa Metadaten, an die Cloud-Infrastruktur übertragen zu können. Diese Verbindung kann insbesondere eine geringere Bandbreite aufweisen als die genannte Verbindung zwischen der Kamera und der On-Set-Recheneinheit (sofern eine solche vorgesehen ist). Vorzugsweise ist die Kamera mit der Cloud-Infrastruktur über ein Weitverkehrsnetzwerk (WAN; *Wide Area Network*) oder das Internet (GAN; *Global Area Network*) verbunden. Das jeweilige Netzwerk kann beispielsweise auf MPLS (*Multiprotocol Label Switching*) als Vermittlungsverfahren und/oder auf IP (*Internet Protocol*) als Netzwerkprotokoll beruhen. Die Kamera kann mit der Cloud-Infrastruktur direkt oder indirekt, insbesondere über das genannte lokale Netzwerk sowie gegebenenfalls über die genannte On-Set-Recheneinheit, verbunden sein. Die Cloud-Infrastruktur kann eine oder mehrere Recheneinheiten (Server) sowie Speicher und/oder Datenbanken umfassen. Insbesondere kann die Cloud-Infrastruktur die genannte Datenbank umfassen, in der die kameraexemplar-spezifischen Daten hinterlegt sein können.

Dabei ist es bevorzugt, dass die Cloud-Infrastruktur eine Recheneinheit umfasst, welche die aufbereiteten Bilddaten erzeugt und/oder ausgibt. Die Recheneinheit, die als Cloud-Server ausgebildet sein kann, kann einen integrierten Schaltkreis (IC), einen Mikroprozessor, eine zentrale Recheneinheit (CPU), eine Grafikprozessoreinheit (GPU), eine Anwendungsspezifische Integrierte Schaltung (ASIC) und/oder ein Field Programmable Gate Array (FPGA) umfassen oder zumindest im Wesentlichen dadurch gebildet sein. Sofern die Cloud-Infrastruktur mehrere Recheneinheiten umfasst, kann jede der Recheneinheiten jeweils auf eine solche Weise ausgebildet sein.

Des Weiteren kann vorgesehen sein, dass die genannte Recheneinheit der Cloud-Infrastruktur alternativ oder zusätzlich zum Erzeugen bzw. Ausgeben der aufbereiteten Bilddaten die genannten teilaufbereiteten Bilddaten bzw. in verschiedenem Maße teilaufbereitete Bilddaten erzeugt und/oder ausgibt. Die Recheneinheit kann dabei dazu ausgebildet sein, die aufbereiteten bzw. die teilaufbereiteten Bilddaten automatisch zu erzeugen und/oder auszugeben. Es kann aber auch vorgesehen sein, dass die Recheneinheit die aufbereiteten bzw. die teilaufbereiteten Bilddaten in Reaktion auf eine jeweilige Benutzereingabe erzeugt und/oder ausgibt.

Gemäß einer weiteren vorteilhaften Ausführungsform ist die Cloud-Infrastruktur über das Weitverkehrsnetzwerk oder das Internet mit dem lokalen Netzwerk und, insbesondere über das lokale Netzwerk, mit der On-Set-Recheneinheit verbunden. Insofern kann die Cloud-Infrastruktur auch mit der Kamera dadurch verbunden sein, dass die Cloud-Infrastruktur mit dem Weitverkehrsnetzwerk oder dem Internet verbunden ist und die Kamera mit dem lokalen Netzwerk verbunden ist, wobei das lokale Netzwerk mit dem Weitverkehrsnetzwerk oder dem Internet verbunden ist.

Gemäß einer weiteren vorteilhaften Ausführungsform werden die vorläufigen Bilddaten zusammen mit den Metadaten zu einem Speicher der Cloud-Infrastruktur übertragen und in dem Speicher gespeichert und werden für das Erzeugen der aufbereiteten Bilddaten und/oder für ein Erzeugen teilaufbereiteter Bilddaten aus dem Speicher ausgelesen. Mit anderen Worten umfasst bei dieser Ausführungsform das genannte Übertragen der vorläufigen Bilddaten zusammen mit den Metadaten zu der externen Bildaufbereitungseinrichtung, dass die vorläufigen Bilddaten zusammen mit den Metadaten zu dem genannten Speicher übertragen und in diesem Speicher gespeichert werden; außerdem umfasst bei dieser Ausführungsform das genannte Erzeugen aufbereiteter Bilddaten bzw. teilaufbereiteter Bilddaten, dass die vorläufigen Bilddaten zunächst, insbesondere wiederum zusammen mit den Metadaten, aus dem Speicher ausgelesen werden, bevor dann die entsprechende Korrektur auf sie angewandt wird. Das Erzeugen aufbereiteter bzw. teilaufbereiteter Bilddaten kann insbesondere mittels der genannten On-Set-Recheneinheit, mittels der genannten Recheneinheit der Cloud-Infrastruktur oder mittels einer sonstigen Recheneinheit der externen Bildaufbereitungseinrichtung erfolgen, wobei die vorläufigen Bilddaten vorzugweise von dieser jeweiligen Recheneinheit aus dem Speicher ausgelesen werden.

Gemäß einer weiteren vorteilhaften Ausführungsform umfasst das Verfahren ferner, dass die vorläufigen Bilddaten bei ihrem Erzeugen in Abhängigkeit von den kameraexemplar-spezifischen Daten verwürfelt werden, indem die vorläufigen Bilddaten relativ zu einer regelmäßigen Reihenfolge in eine unregelmäßige Reihenfolge gebracht werden. Die regelmäßige Reihenfolge kann beispielsweise der Anordnung der Sensorzellen entlang von Zeilen und/oder Spalten entlang des Bildsensors entsprechen, oder der Anordnung von Zeilenverstärkern und/oder Spaltenverstärkern des Bildsensors, oder der Anordnung von Analog/Digital-Wandlern des Bildsensors oder der hiervon separaten Ausleseelektronik. Bei derartigen Ausführungsformen können die Metadaten Informationen über das Verwürfeln umfassen, und die von den kameraexemplar-spezifischen Daten abhängige Korrektur kann umfassen, dass die vorläufigen Bilddaten anhand der Information über das Verwürfeln wieder entwürfelt werden, indem die vorläufigen Bilddaten ausgehend von der unregelmäßigen Reihenfolge in die regelmäßige Reihenfolge gebracht werden.

Grundsätzlich kann das Verwürfeln, das auch als Scrambling bezeichnet wird, erst in der externen Bildaufbereitungseinheit erfolgen, beispielsweise wenn es einer Art von Verschlüsselung der Bilddaten dient. Vorzugsweise erfolgt das Verwürfeln jedoch in der Kamera oder jedenfalls vor dem Übertragen an die externe Bildaufbereitungseinrichtung, insbesondere dann, wenn es dazu dient, Abweichungen zwischen verschiedenen Komponenten der Ausleseelektronik, etwa Zeilen- oder Spaltenverstärkern (d. h. Verstärkern, die jeweils einer ganzen Zeile oder Spalte von Sensorzellen des Bildsensors zugeordnet sind), zu verschleiern.

Denn wenn einzelne Zeilen- oder Spaltenverstärker die von den Sensorzellen in der jeweiligen Zeile bzw. Spalte erzeugten Bildsignalwerte in stärkerem oder geringerem Maße verstärken als benachbarte Zeilen- bzw. Spaltenverstärker, können diese Zeilen bzw. Spalten im Bild als im Vergleich zu ihrer Umgebung hellere oder dunklere Streifen erscheinen. Durch das Verwürfeln kann dies vermieden werden, indem die Bildsignalwerte einer jeweiligen Zeile bzw. Spalte je nach ihrer Position innerhalb der Zeile bzw. Spalte in eine (näher oder weiter) benachbarte Zeile bzw. Spalte verschoben werden, so dass sie mittels des Zeilen- bzw. Spaltenverstärkers der benachbarten Zeile bzw. Spalte verstärkt werden und die Zeilen bzw. Spalten insofern "verwürfelt" werden (vgl. beispielsweise DE 10 2007 058 973 A1 oder DE 10 2007 027 463 A1). Im jeweiligen Einzelbild sind infolge des Verwürfelns aufeinanderfolgende Spalten bzw. Zeilen relativ zueinander in unterschiedlichem Maße (entlang ihrer jeweiligen Längsrichtung) verschoben, so dass durch Abweichungen zwischen den Zeilen- bzw. Spaltenverstärkern verursachte senkrecht zu dieser Verschiebung verlaufende hellere oder dunklere Streifen nach einem Rückgängigmachen der Verschiebung (Entwürfeln/Descrambling) auf mehrere Zeilen bzw. Spalten verteilt und sozusagen verwischt sind. So führt das Verwürfeln dazu, dass sich die Abweichungen in weniger wahrnehmbarer Weise auf das Bild auswirken.

Insbesondere weil die Abweichungen zwischen den Zeilen- bzw. Spaltenverstärkern in der Regel kameraexemplar-spezifisch sind, kann auch das Muster, nach dem das Verwürfeln erfolgt, (d. h. welche Zeile bzw. Spalte wie weit verschoben wird) kameraexemplar-spezifisch sein. Insofern kann die genannte Information über das Verwürfeln insbesondere dieses jeweilige Muster umfassen, das dann als Teil der kameraexemplar-spezifischen Daten in die von den kameraexemplar-spezifischen Daten abhängige Korrektur, welche das Entwürfeln umfasst, einfließt. Wenn es sich bei den Bilddaten um Bewegbilddaten handelt, kann das Muster außerdem zeitlich variieren, muss also für mehrere aufeinanderfolgende Einzelbilder nicht unbedingt dasselbe sein, wobei auch die zeitliche Abhängigkeit des Musters kameraexemplar -spezifisch und somit Teil der kameraexemplar-spezifischen Daten sein kann.

Grundsätzlich kann ferner vorgesehen sein, dass auch das beschriebene Erzeugen teilaufbereiteter Bilddaten umfasst, dass die vorläufigen Bilddaten anhand der Information über das Verwürfeln wieder entwürfelt werden. Dabei kann sich (ähnlich wie weiter oben bereits beschrieben) die jeweilige Korrektur darauf beschränken, dass nur ein Teil der verwürfelten vorläufigen Bilddaten wieder entwürfelt wird. Im Falle von Bewegtbilddaten kann das insbesondere bedeuten, dass - wie bereits in genereller Weise beschrieben - beim Erzeugen der teilaufbereiteten Bilddaten nicht alle Einzelbilder wieder entwürfelt werden, sondern sich das Entwürfeln auf einen Teil der Bilddaten beschränkt, der für ein Abspielen der Bilddaten bei einer im Vergleich zu der Bildrate, mit der die Bilddaten aufgezeichnet worden sind, reduzierten Bildrate ausreicht. Beispielsweise kann vorgesehen sein, dass der Bildsensor dazu angesteuert wird, die Bildsignalwerte mit einer Bildrate von 60 fps (*frames per second*, Einzelbild pro Sekunde) oder 120 fps zu erzeugen, so dass die daraus erzeugten und verwürfelten vorläufigen Bilddaten ebenfalls diese Bildrate aufweisen. Beim Erzeugen der teilaufbereiteten Bilddaten wird dann beispielsweise nur jedes zweite bzw. vierte Einzelbild der vorläufigen Bilddaten wieder entwürfelt, wohingegen die übrigen Einzelbilder nicht entwürfelt oder einfach weggelassen werden, so dass die teilaufbereiteten Bilddaten eine entsprechend reduzierte Bildrate von beispielsweise 30 fps aufweisen. Solche teilaufbereiteten Bilddaten mit reduzierter Bildrate können dann an einer Monitorvorrichtung (beispielsweise in einem elektronischen Sucher oder auf einem Monitor) angezeigt werden, damit sich eine Aufnahme mit vergleichsweise geringem Aufwand schnell überprüfen lässt.

Die Erfindung wird im Folgenden lediglich beispielhaft unter Bezugnahme auf die Figuren weiter erläutert.
- Fig. 1: zeigt in vereinfachter schematischer Darstellung ein Bildaufzeich-nungssystem, das zur Ausführung eine Ausführungsform des erfindungsgemäßen Verfahrens ausgebildet ist.
- Fig. 2: veranschaulicht in schematischer Darstellung den Ablauf einer Ausführungsform des erfindungsgemäßen Verfahrens.

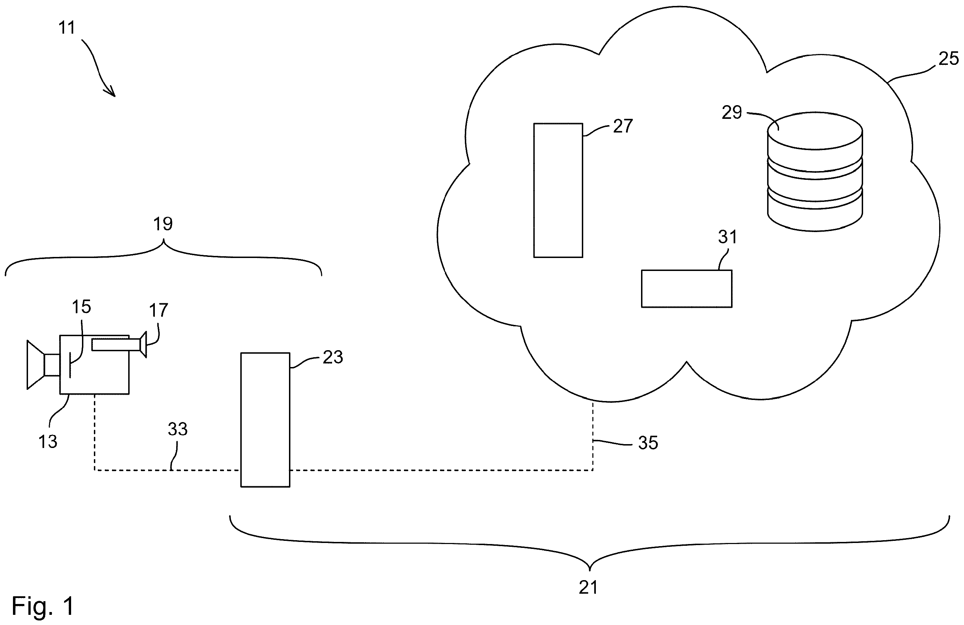

In Fig. 1 ist ein Bildaufzeichnungssystem 11 gezeigt, mittels dessen Bilddaten erzeugt und aufbereitet werden können. Das Erzeugen der Bilddaten erfolgt mittels einer Kamera 13 des Bildaufzeichnungssystems 11, die einen Bildsensor 15 umfasst. Außerdem umfasst die Kamera 13 einen elektronischen Sucher 17. Die Kamera 13 ist Teil eines Sets 19, an dem beispielsweise eine (nicht gezeigte) Szene mittels der Kamera 13 aufgezeichnet wird. Das Bildaufzeichnungssystem 11 umfasst ferner eine externe Bildaufbereitungseinrichtung 21, die von der Kamera 13 separat ausgebildet ist.

Bei der gezeigten Ausführungsform umfasst die externe Bildaufbereitungseinrichtung 21 zum einen eine On-Set-Recheneinheit 23, die als Edge-Server fungiert, und zum anderen eine Cloud-Infrastruktur 25, die ihrerseits eine oder mehrere Recheneinheiten 27, Datenbanken 29 und/oder Speicher 31 umfasst. Die On-Set-Recheneinheit 23 befindet sich dabei am Set 19 und ist über ein lokales Netzwerk 33 mit der Kamera 13 verbunden, so dass sie über das lokale Netzwerk 33 von der Kamera 13 Bilddaten empfangen kann. Die Verbindung zwischen der Kamera 13 und der On-Set-Recheneinheit 23 über das lokale Netzwerk 33 kann dabei kabelgebunden oder kabellos sein. Die Cloud-Infrastruktur 25 ist dagegen von dem Set 19 entfernt ausgebildet und kann insbesondere auch auf verschiedene Standorte, etwa verschiedene Rechenzentren, verteilt sein. Die Cloud-Infrastruktur 25 ist über das Internet 35 mit der On-Set-Recheneinheit 23 verbunden, wobei diese Verbindung dadurch vorliegen kann, dass die Cloud-Infrastruktur 25 über das Internet 35 mit dem lokalen Netzwerk 33 verbunden ist. Die Verbindung zwischen der Kamera 13 und der On-Set-Recheneinheit 23 über das lokale Netzwerk 33 weist dabei eine höhere Bandbreite auf als die Verbindung zur Cloud-Infrastruktur 25 über das Internet.

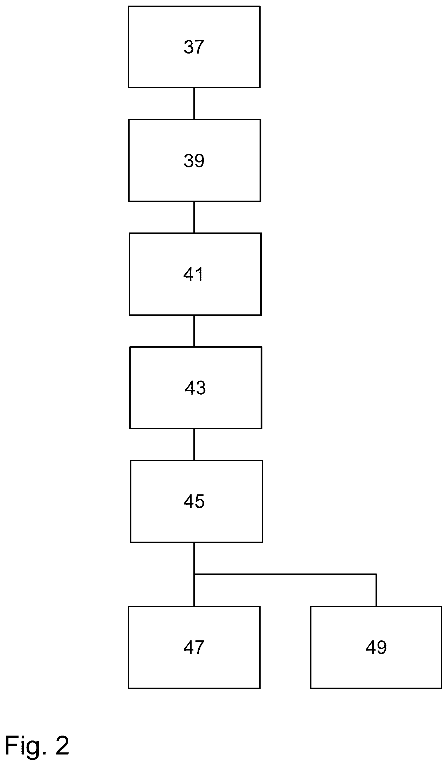

Das Bildaufzeichnungssystem 11 ist dazu ausgebildet, ein erfindungsgemäßes Verfahren auszuführen. Eine mögliche Ausführungsform des erfindungsgemäßen Verfahrens ist in Fig. 2 veranschaulicht, in der einzelne Schritte 37-49 des Verfahrens als Blöcke dargestellt sind.

In einem Schritt 37 des Verfahrens werden kameraexemplar-spezifische Daten über festgestellte Eigenschaften der Kamera 13, insbesondere des Bildsensors 15, einzelner Sensorzellen des Bildsensors 15 und/oder einer Ausleseelektronik der Kamera 13, bereitgestellt, die von kameramodell-generischen Eigenschaften der Kamera 13, insbesondere des Bildsensors 15, der einzelnen Sensorzellen bzw. der Ausleseelektronik, abweichen können. Beispielsweise können die kameraexemplar-spezifischen Daten dadurch bereitgestellt werden, dass sie in der Datenbank 29 der Cloud-Infrastruktur 25 hinterlegt sind. Von dort können Sie dann anhand einer Identifikationsinformation über das jeweilige Kameraexemplar, d. h. über die konkret verwendete Kamera 13, ausgelesen werden.

Das Verfahren umfasst ferner den Schritt 39, in dem der Bildsensor 15 dazu angesteuert wird, in Abhängigkeit von der Intensität des auf die Sensorzellen auftreffenden Lichts jeweilige Bildsignalwerte zu erzeugen. Des Weiteren umfasst das Verfahren den Schritt 41, in dem in der Kamera 13 die Bildsignalwerte ausgelesen werden, und den Schritt 43, in dem in der Kamera 13 aus den Bildsignalwerten vorläufige Bilddaten erzeugt werden.

In einem weiteren Schritt 45 des Verfahrens werden die vorläufigen Bilddaten zusammen mit Metadaten, welche die kameraexemplar-spezifischen Daten umfassen oder zumindest, etwa in Form der genannten Identifikationsinformation, eine Zuordnung von in der Datenbank 29 gespeicherten kameraexemplar-spezifischen Daten zu den vorläufigen Bilddaten erlauben, zu der externen Bildaufbereitungseinrichtung 21 übertragen, nämlich in dem gezeigten Beispiel jedenfalls zunächst zu der On-Set-Recheneinheit 23. Die externe Bildaufbereitungseinrichtung 21 erzeugt dann in einem Schritt 47 des Verfahrens aufbereitete Bilddaten, indem auf die vorläufigen Bilddaten eine von den kameraexemplar-spezifischen Daten abhängige Korrektur angewandt wird, wobei dies in der On-Set-Recheneinheit 23 und/oder in einer Recheneinheit 27 der Cloud-Infrastruktur 25 erfolgen kann.

Darüber hinaus ist bei der gezeigten Ausführungsform des Verfahrens vorgesehen, dass die externe Bildaufbereitungseinrichtung 21 in einem weiteren Schritt 49 auch lediglich teilaufbereitete Bilddaten erzeugen kann, indem auf die vorläufigen Bilddaten eine vereinfachte Korrektur angewandt wird, die von den kameraexemplar-spezifischen Daten unabhängig ist oder die im Vergleich zu der für das Erzeugen der (vollständig) aufbereiteten Bilddaten im Schritt 47 angewandten Korrektur zumindest in geringerem Umfang von den kameraexemplar-spezifischen Daten abhängt. Alternativ dazu könnten im Schritt 49 auch in der Kamera teilaufbereitete Bilddaten erzeugt werden, indem lediglich auf einen Teil der vorläufigen Bilddaten eine von den kameraexemplar-spezifischen Daten abhängige Korrektur angewandt wird. Im Anschluss an das Erzeugen der aufbereiteten Bilddaten bzw. der teilaufbereiteten Bilddaten können diese jeweils gespeichert und/oder ausgegeben werden.

Insbesondere kann ferner vorgesehen sein, dass der Bildsensor 15 dazu angesteuert wird, fortlaufend Bildsignalwerte zu erzeugen, die in der Kamera 13 fortlaufend ausgelesen und aus denen fortlaufend vorläufige Bilddaten erzeugt werden, die dann fortlaufend an die externe Bildaufbereitungseinrichtung 21 übertragen werden. Die externe Bildaufbereitungseinrichtung 21 kann aus den übertragenen vorläufigen Bilddaten fortlaufend teilaufbereite Bilddaten erzeugen und sie an eine Monitorvorrichtung, insbesondere den genannten elektronischen Sucher 17 der Kamera 13, ausgeben, an der sie fortlaufend angezeigt werden. Auf diese Weise können die Bilddaten schon während ihres Aufzeichnens in teilaufbereiteter Form als ein Live-Bild betrachtet werden. Alternativ oder zusätzlich zu dem Anzeigen an dem Sucher 17 können die teilaufbereiteten Bilddaten auch an eine von der Kamera 13 separate Monitorvorrichtung fortlaufend ausgegeben und dann daran angezeigt werden.

Ob (vollständig) aufbereitete Bilddaten und/oder lediglich teilaufbereitete Bilddaten erzeugt werden, kann dabei davon abhängen, ob die externe Bildaufbereitungseinrichtung 21 eine erste Benutzereingabe oder eine zweite Benutzereingabe empfängt. Durch die jeweilige Benutzereingabe kann somit vorteilhafterweise ausgewählt werden, in welchem Umfang die Bilddaten aufbereitet werden sollen, so dass das Verfahren es ermöglicht, dass je nach Bedarf Bilder unterschiedlicher Qualität erhalten werden können.

### Bezugszeichen

- 11: Bildaufzeichnungssystem
- 13: Kamera
- 15: Bildsensor
- 17: Sucher
- 19: Set
- 21: externe Bildaufbereitungseinrichtung
- 23: On-Set-Recheneinheit
- 25: Cloud-Infrastruktur
- 27: Recheneinheit
- 29: Datenbank
- 31: Speicher
- 33: lokales Netzwerk
- 35: Internet
- 37-49: Verfahrensschritte

## Patentansprüche

1. Verfahren zum Erzeugen von Bilddaten mittels einer Kamera (13) und Aufbereiten der Bilddaten mittels einer externen Bildaufbereitungseinrichtung (21),
wobei die Kamera (13) einen Bildsensor (15), der eine Vielzahl von in Zeilen und Spalten angeordneten lichtempfindlichen Sensorzellen aufweist, sowie eine Ausleseelektronik umfasst, und
wobei das Verfahren umfasst:
- dass kameraexemplar-spezifische Daten über festgestellte Eigenschaften der Kamera (13) bereitgestellt werden, die von kameramodell-generischen Eigenschaften der Kamera (13) abweichen können;
- dass der Bildsensor (15) dazu angesteuert wird, in Abhängigkeit von der Intensität des auf die Sensorzellen auftreffenden Lichts jeweilige Bildsignalwerte zu erzeugen;
- dass in der Kamera (13) die Bildsignalwerte ausgelesen und aus den Bildsignalwerten vorläufige Bilddaten erzeugt werden;
- dass die vorläufigen Bilddaten zusammen mit Metadaten, welche die kameraexemplar-spezifischen Daten umfassen oder zumindest eine Zuordnung der kameraexemplar-spezifischen Daten zu den vorläufigen Bilddaten erlauben, zu der externen Bildaufbereitungseinrichtung (21) übertragen werden; und
- dass die externe Bildaufbereitungseinrichtung (21) aufbereitete Bilddaten erzeugt, indem auf die vorläufigen Bilddaten eine von den kameraexemplar-spezifischen Daten abhängige Korrektur angewandt wird.

2. Verfahren nach Anspruch 1,
wobei die kameraexemplar-spezifischen Daten Eigenschaften des Bildsensors (15), Eigenschaften der Ausleseelektronik und/oder individuelle Eigenschaften der einzelnen Sensorzellen des Bildsensors (15) betreffen, und/oder
wobei die kameraexemplar-spezifischen Daten Verstärkungs-Korrekturversatze der Sensorzellen, Verstärkungs-Korrekturfaktoren der Sensorzellen, Statusinformationen über defekte Sensorzellen des Bildsensors (15) und/oder Parameter nicht-linearer Kennlinien der Sensorzellen des Bildsensors (15) umfassen,
und/oder
wobei die Metadaten zusätzlich aufnahme-spezifische Daten über Betriebsbedingungen umfassen, die während des Erzeugens der Bildsignalwerte vorgelegen haben und die geeignet sind, einen Einfluss auf das Erzeugen der Bildsignalwerte zu haben, und die genannte Korrektur zusätzlich von den aufnahme-spezifischen Daten abhängt.

3. Verfahren nach Anspruch 1 oder 2,
wobei das Bereitstellen der kameraexemplar-spezifischen Daten umfasst, dass die kameraexemplar-spezifischen Daten in einer Datenbank (29) hinterlegt sind,
wobei die an die externe Bildaufbereitungseinrichtung (21) übertragenen Metadaten eine Identifikationsinformation über die Kamera (13) oder Teile der Kamera (13) umfassen, und
wobei das Verfahren umfasst, dass die externe Bildaufbereitungseinrichtung (21) anhand der Identifikationsinformation die kameraexemplar-spezifischen Daten aus der Datenbank (29) ausliest und den übertragenen vorläufigen Bilddaten zuordnet.

4. Verfahren nach Anspruch 3,
wobei das Auslesen der kameraexemplar-spezifischen Daten aus der Datenbank (29) einen im Rahmen einer Benutzereingabe empfangenen Nachweis einer Ausleseberechtigung voraussetzt.

5. Verfahren nach einem der vorstehenden Ansprüche,
welches ferner umfasst:
- dass in der Kamera (13) oder von der externen Bildaufbereitungseinrichtung (21) teilaufbereitete Bilddaten erzeugt werden, vorzugsweise indem auf einen, insbesondere einstellbaren, Teil der vorläufigen Bilddaten eine von den kameraexamplar-spezifischen Daten abhängige Korrektur, insbesondere die genannte Korrektur, angewandt wird.

6. Verfahren nach Anspruch 5,
wobei die vorläufigen Bilddaten einer Bewegtbildsequenz entsprechen, die eine Abfolge mehrerer Einzelbilder umfasst, wobei die teilaufbereiteten Bilddaten erzeugt werden, indem lediglich auf einen Teil der vorläufigen Bilddaten, der einer Teilmenge der mehreren Einzelbilder entspricht, eine von den kameraexamplar-spezifischen Daten abhängige Korrektur, insbesondere die genannte Korrektur, angewandt wird, während auf den übrigen Teil der vorläufigen Bilddaten, der den weiteren der mehreren Einzelbilder entspricht, eine solche Korrektur nicht angewandt wird,
wobei vorzugsweise ferner vorgesehen ist, dass die Teilmenge der mehreren Einzelbilder einer ersten Bildrate der Bewegtbildsequenz entspricht, dass die Gesamtheit der mehreren Einzelbilder einer zweiten Bildrate der Bewegtbildsequenz entspricht, und dass die zweite Bildrate höher ist als die erste Bildrate.

7. Verfahren nach Anspruch 5 oder 6,
wobei die teilaufbereiteten Bilddaten erzeugt werden, indem auf die vorläufigen Bilddaten eine vereinfachte Korrektur angewandt wird, die im Vergleich zu der genannten Korrektur in geringerem Umfang von den kameraexemplar-spezifischen Daten abhängt,
wobei der Grad, um den die vereinfachte Korrektur im Vergleich zu der genannten Korrektur in geringerem Umfang von den kameraexemplar-spezifischen Daten abhängt, vorzugsweise einstellbar ist.

8. Verfahren nach einem der Ansprüche 1 bis 4,
welches ferner umfasst:
- dass in der Kamera (13) oder von der externen Bildaufbereitungseinrichtung (21) teilaufbereitete Bilddaten erzeugt werden, indem auf die vorläufigen Bilddaten eine vereinfachte Korrektur angewandt wird, die von den kameraexemplar-spezifischen Daten unabhängig ist.

9. Verfahren nach einem der Ansprüche 5 bis 8,
wobei die externe Bildaufbereitungseinrichtung (21) dazu ausgebildet ist, Benutzereingaben zu empfangen, und die externe Bildaufbereitungseinrichtung (21) in Reaktion auf eine erste Benutzereingabe die aufbereiteten Bilddaten erzeugt und/oder ausgibt und in Reaktion auf eine zweite Benutzereingabe die teilaufbereiteten Bilddaten erzeugt und/oder ausgibt; und/oder
wobei das Verfahren ferner umfasst:
- dass die teilaufbereiteten Bilddaten fortlaufend erzeugt und an eine Monitorvorrichtung (17) ausgegeben werden, an der sie fortlaufend angezeigt werden.

10. Verfahren nach einem der vorstehenden Ansprüche,
welches ferner umfasst:
- dass die vorläufigen Bilddaten fortlaufend an die externe Bildaufbereitungseinrichtung (21) übertragen werden, während in der Kamera (13) fortlaufend weitere vorläufige Bilddaten erzeugt werden.

11. Verfahren nach einem der Ansprüche 1 bis 4,
welches ferner umfasst:
- dass von der externen Bildaufbereitungseinrichtung (21) teilaufbereitete Bilddaten erzeugt werden,
wobei die vorläufigen Bilddaten fortlaufend an die externe Bildaufbereitungseinrichtung (21) übertragen werden, während in der Kamera (13) fortlaufend weitere vorläufige Bilddaten erzeugt werden, und wobei die externe Bildaufbereitungseinrichtung (21) die teilaufbereiteten Bilddaten fortlaufend erzeugt und an eine Monitorvorrichtung (17) ausgibt, an der sie fortlaufend angezeigt werden.

12. Verfahren nach einem der vorstehenden Ansprüche,
wobei die externe Bildaufbereitungseinrichtung eine On-Set-Recheneinheit (23) umfasst, die mit der Kamera (13) über eine lokale, vorzugsweise hochbandbreitige, Datenverbindung (33) verbunden ist,
wobei vorzugsweise ferner vorgesehen ist, dass die On-Set-Recheneinheit (23) die aufbereiteten Bilddaten erzeugt und/oder ausgibt.

13. Verfahren nach einem der vorstehenden Ansprüche,
wobei die externe Bildaufbereitungseinrichtung (21) eine Cloud-Infrastruktur (25) umfasst, mit der die Kamera (13) vorzugsweise über ein Weitverkehrsnetzwerk (WAN) oder das Internet (35) verbunden ist und die vorzugsweise eine Recheneinheit (27) umfasst, welche die aufbereiteten Bilddaten erzeugt und/oder ausgibt,
wobei vorzugsweise ferner vorgesehen ist, dass die externe Bildaufbereitungseinrichtung eine On-Set-Recheneinheit (23) umfasst, die mit der Kamera (13) über eine lokale Datenverbindung (33) verbunden ist, und die Cloud-Infrastruktur (25) über das Weitverkehrsnetzwerk oder das Internet (35) mit dem lokalen Netzwerk (33) und der On-Set-Recheneinheit (23) verbunden ist.

14. Verfahren nach Anspruch 13,
wobei:
- das Bereitstellen der kameraexemplar-spezifischen Daten umfasst, dass die kameraexemplar-spezifischen Daten in einer Datenbank (29) hinterlegt sind,
- die an die externe Bildaufbereitungseinrichtung (21) übertragenen Metadaten eine Identifikationsinformation über die Kamera (13) einschließlich Teile der Kamera (13) umfassen,
- das Verfahren umfasst, dass die externe Bildaufbereitungseinrichtung (21) anhand der Identifikationsinformation die kameraexemplar-spezifischen Daten aus der Datenbank (29) ausliest und den übertragenen vorläufigen Bilddaten zuordnet, und
- die Cloud-Infrastruktur (25) die genannte Datenbank (29) umfasst;
und/oder wobei:
- die vorläufigen Bilddaten zusammen mit den Metadaten zu einem Speicher (31) der Cloud-Infrastruktur (25) übertragen und in dem Speicher (31) gespeichert werden und für das Erzeugen der aufbereiteten Bilddaten aus dem Speicher (31) ausgelesen werden.

15. Verfahren nach einem der vorstehenden Ansprüche,
welches ferner umfasst:
- dass die vorläufigen Bilddaten bei ihrem Erzeugen in Abhängigkeit von den kameraexemplar-spezifischen Daten verwürfelt werden, indem die vorläufigen Bilddaten relativ zu einer regelmäßigen Reihenfolge in eine unregelmäßige Reihenfolge gebracht werden, wobei die Metadaten Informationen über das Verwürfeln umfassen; und
- dass die von den kameraexemplar-spezifischen Daten abhängige Korrektur umfasst, dass die vorläufigen Bilddaten anhand der Information über das Verwürfeln wieder entwürfelt werden, indem die vorläufigen Bilddaten ausgehend von der unregelmäßigen Reihenfolge in die regelmäßige Reihenfolge gebracht werden.
